# EUROPEAN PATENT APPLICATION

(11) **EP 2 998 136 A1**
(43) Date of publication of application: **23.03.2016**
(21) Application number: 15388003.4
(22) Date of filing: 15.09.2015
(51) Int. Cl.: B60G 11/27, B60G 11/28, F16F 9/54, F16F 9/05

(54) **ASSEMBLY SYSTEM FOR ASSEMBLING SUSPENSION COMPONENTS ON A VEHICLE**

(30) Priority: 18.09.2014 DK 201400530
(71) Applicant: HBN-Teknik A/S, 4100 Ringsted (DK)
(72) Inventor: Villadsen, Kim, 4100 Ringsted (DK)
(74) Representative: Larsen & Birkeholm A/S

(57) **Abstract**

By securing a pneumatic damping tank (20) according to the invention to a chassis frame (10, 12) on a vehicle by means of a plastic retaining plate (4), the parts can be formed so that the tank (20) can be mounted on the plate (4) by means of a snap lock joint, wherein the assembly can be carried out quickly and easily completely without the use of tools.

The plate (4) can be mounted on the horizontal part (10) of the frame or on its vertical part (12) by means of bolted joints of prior art.

## Description

### Prior art

The invention relates to an assembly system for assembling pneumatic suspension components for a chassis frame on a vehicle, which components comprise an airtight tank with a compressed air connection at the top and with a lower flexible bottom which is blocked off from the tank by means of bellows, wherein the tank has an opening at the top whose edge section is able to grip a recess projecting from the underside of a retaining plate and is secured in a snap lock joint, which retaining plate is provided with means for securing to the chassis frame.

Suspension systems of this type are generally used for the suspension/vibration damping of vehicles such as trucks, buses, trailers and corresponding mobile units.

US 6,926,264 B1 discloses an assembly system comprising an airtight tank (14) with a compressed air connection at the top (23), a lower flexible bottom (4) and bellows (5), which top tank (14) has an opening with an edge section which can grip a recess projecting from the underside of a retaining plate (12) to form a snap lock assembly, which retaining plate (12) is provided with means (24, 26, 27, 13) for securing to the chassis frame.

This is a difficult, time-consuming process which also generates noise if the fittings become loose.

### The object of the invention

The object of the invention is to simplify and improve assembly systems of this type and it is achieved according to the invention in that the retaining plate is provided with a back piece which runs perpendicular to the plate to form a contact surface that can rest against the vertical part of the frame and secured to it.

Because the retaining plate is provided with a vertical upright assembly part, it could be assembled by supporting it against the rear side of the chassis frame in a solid manner that can be carried out quickly.

By mounting the plate either secured to the horizontal or vertical part of the chassis frame by bolted joints of prior art, as mentioned in claim 2, this assembly could be achieved by anyone without the need for special tools.

By providing the underside of the plate with stiffening ribs, as mentioned in claim 3, the plate is given a high degree of stability and there is a saving in material during production.

By adapting the shape between the top of the tank and the bottom of the plate, as mentioned in claim 4, so that the tank curves from its lateral wall to its top, a high degree of stability is achieved for a solid, unshakeable and compact assembly of these two components.

By providing the plate with a connection socket, as mentioned in claim 5, the air feed pipe can easily be established by means of a snap or threaded joint.

Finally, as mentioned in claim 6, it is appropriate to manufacture the plate from plastic to provide a strong, vibration-free component that will contribute to damping vibrations due to the relative softness of the material.

### The drawing

An example of an embodiment of the invention will be described in more detail in the following with reference to the drawing, in which
Fig. 1 shows the components inside the assembly, viewed in partial cross-section,
Fig. 2 shows the components viewed assembled in partial cross-section,
Fig. 3 shows the plate with the upright assembly wall viewed in perspective,
Fig. 4 shows the plate viewed from below,
Fig. 5 shows the plate with the connection socket fitted, and
Fig. 6 shows a sectional view of the plate.

### Description of an embodiment

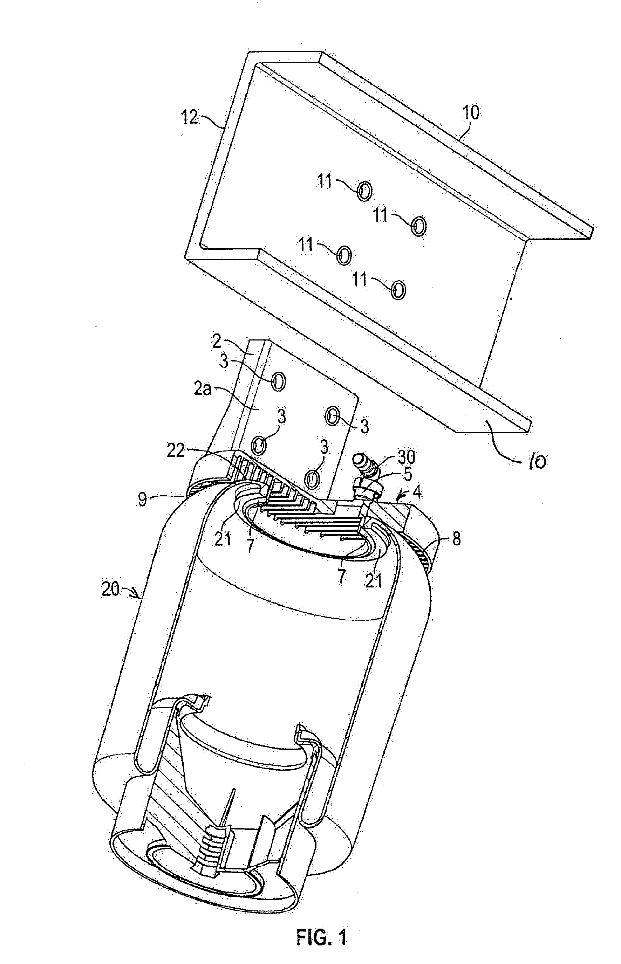

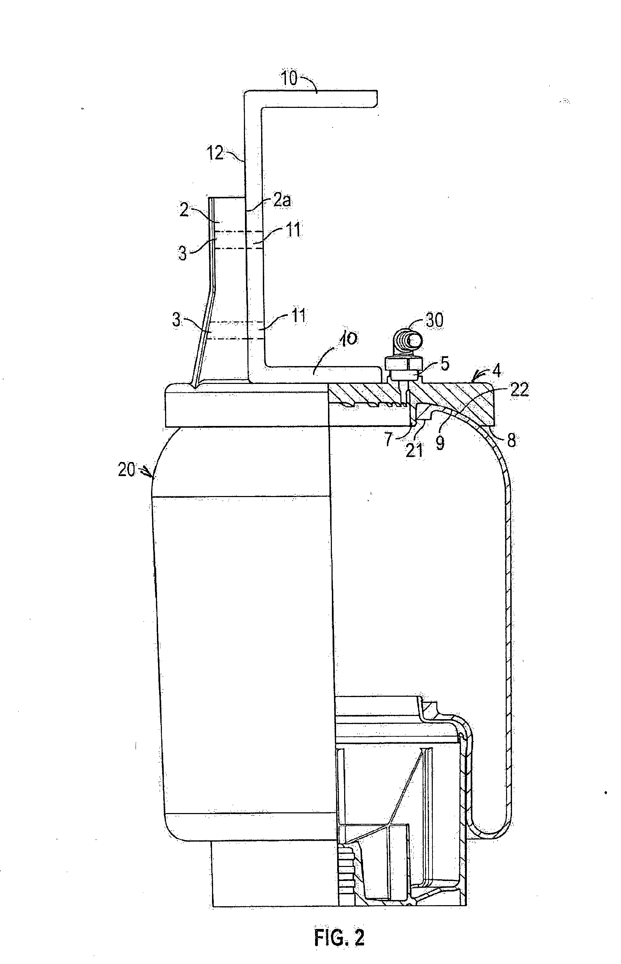

Figs. 1 and 2 show the components which comprise the assembly system according to the invention.

The object is to establish a simple, fast and safe method of assembling an air tank 20 for a chassis frame 10, 12 on a vehicle.

Tank 20 is an air-filled tank with bellows below so that the bottom is able to absorb impacts and vibrations and transmit them to the air in the tank for the purpose of damping the effect of the chassis.

Tank 20 is cylindrical in shape on the side, whilst at the top it rounds to form a curved transition 22 which is shaped along a circular opening to form a circular edge 21.

The joint between tank 20 and plate 4 is shown in Fig. 2.

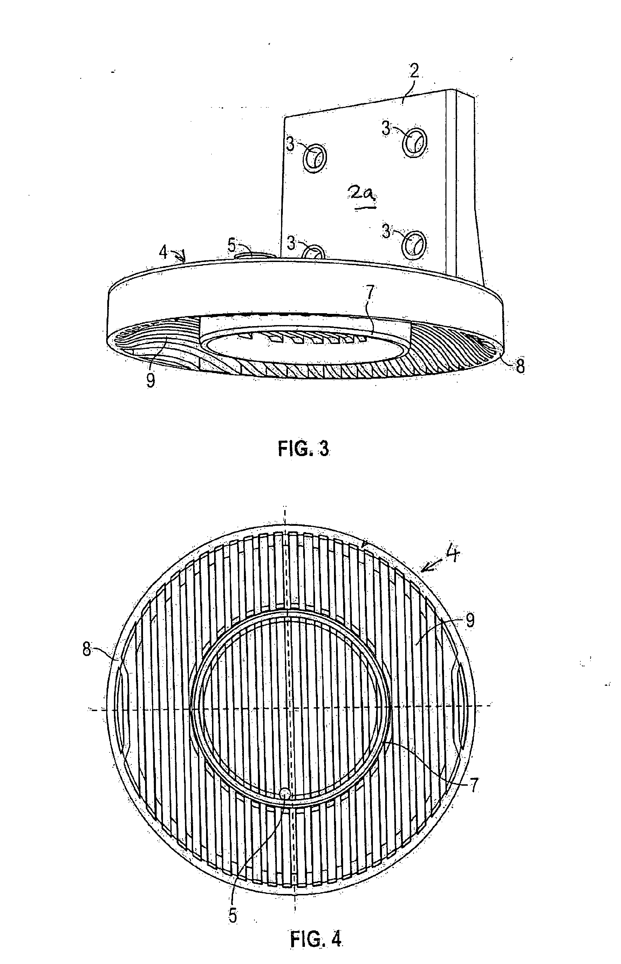

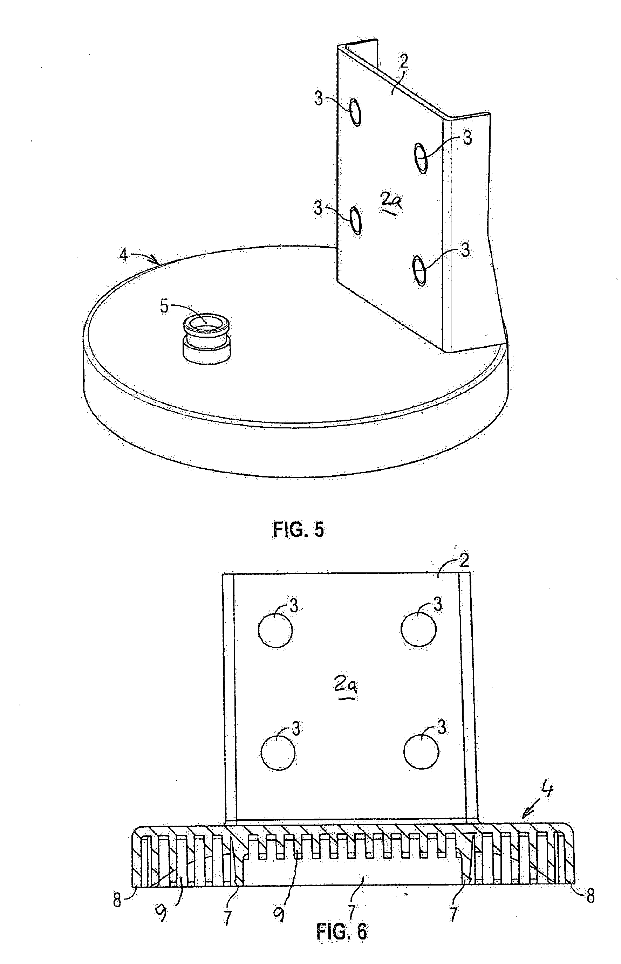

As shown in Figs. 3-5, plate 4 is a circular disc which is provided both with an outer edge 8 and with a circular recess 7, which is dimensioned to be able to engage with a tight fit with edge 21 of the tank, as sown in Fig. 2.

To ensure good contact between the upper part of the tank and the plate, the latter is curved on the underside to correspond with curvature 22 of the tank. This provides secure positioning of the tank and the transmission of force from the tank to the plate is rendered precise without displacements.

Moreover, transverse ribs 9, whose purpose is to stiffen the plate and hence render it suitable for absorbing compressive stresses from tank 20, are formed on the underside of plate 4, as shown in Figs. 3 and 4,

Finally, an air connection socket 5, which is designed to be able to be connected to a compressed air hose for filling the tank with air, is fitted inside projection 7 on plate 4. Socket 5 is preferably cast onto plate 4.

For this purpose a snap coupling 30, or possibly a threaded joint, may be formed on socket 5 for securing the hose. A non-return valve is built into the socket.

On the upper side plate 4 lies flush against bottom side 10 of the chassis frame. In this embodiment plate 4 will therefore be provided with holes, not shown, for bolts which can be screwed into frame 10.

In the example shown plate 4 is provided with a vertical rear wall 2, which is flush 2a to the rear side 12 of the chassis frame, as shown in Fig. 2.

In the embodiment shown there are four holes 11 drilled through the wall for a bolted joint.

The assembly work will now be described.

Holes are first marked out for the bolts, which can be screwed through the frame, possibly by cutting a thread for fitting the plate.

Air tank 20 can then be mounted by pressing it upwards until edge section 21 engages with recess 7 on the retainer.

Since the parts are shaped into a snap lock, the assembly will be carried out both easily and quickly.

The plate will preferably be made of plastic which, because of its relative softness, will have a damping effect and will be completely without risk of corrosion.

It will be correspondingly easy to remove the tank by suitably pulling it down until the coupling is disengaged. This considerably facilitates service work without requiring tools.

## Claims

1. An assembly system for assembling pneumatic suspension components for a chassis frame on a vehicle, which components comprise an airtight tank with a compressed air connection at top and with a lower flexible bottom which is blocked off from the tank by means of bellows, wherein the tank has at the top an opening whose edge section is able to grip a recess projecting from an underside of a retaining plate, thereby securing it in a snap lock joint, which retaining plate is provided with means for securing to the chassis frame, **characterised in that** the retaining plate (4) is provided with a back piece (2) which runs perpendicular to the plate (4) to form a contact surface (2a) which may rest against the vertical part (12) of the frame and can be secured to it,

2. The assembly system according to claim 1, **characterised in that** the fastening means consists of fastening means of prior art, such as a bolted joint via holes (3, 11).

3. The assembly system according to claims 1 and 2, **characterised in that** the underside of the plate (4) resting against the tanks (20) is provided with stiffening ribs (9).

4. The assembly system according to claims 1-3, **characterised in that** the upper edge section (22) of the tanks (20) is rounded from the lateral wall against the edge section (21) to rest against the underside of the plate (4), which is correspondingly hollowed out (9) to form a common surface of contact and support.

5. The assembly system according to claims 1-4, **characterised in that** an air connection socket (5) is formed in the plate (4) with connection to the inside of the tank (20), to which socket can be connected to an air hose by means of a threaded joint or snap coupling (30).

6. The assembly system according to claims 1-5, **characterised in that** the plate (4) with the socket (5) is manufactured by casting in plastic.
